# EUROPEAN PATENT APPLICATION

(11) **EP 4 730 089 A1**
(43) Date of publication of application: **22.04.2026**
(21) Application number: 24832301.6
(22) Date of filing: 04.06.2024
(51) Int. Cl.: G06F 3/048, G06F 1/16

(54) **ELECTRONIC DEVICE FOR PROVIDING COVER FACE ASSOCIATED WITH WATCH FACE, OPERATING METHOD THEREOF, AND STORAGE MEDIUM**

(30) Priority: 28.06.2023 KR 20230083318; 04.08.2023 KR 20230102070
(71) Applicant: Samsung Electronics Co., Ltd., Suwon-si, Gyeonggi-do 16677 (KR)
(72) Inventor: LEE, Hana, Suwon-si, Gyeonggi-do 16677 (KR); KIM, Yeojin, Suwon-si, Gyeonggi-do 16677 (KR); PARK, Yongki, Suwon-si, Gyeonggi-do 16677 (KR); HAN, Yonggil, Suwon-si, Gyeonggi-do 16677 (KR); HAN, Woojung, Suwon-si, Gyeonggi-do 16677 (KR)
(74) Representative: Gulde & Partner
(86) International application number: PCT/KR2024/007653
(87) International publication number: WO 2025/005520

(57) **Abstract**

According to an embodiment, an electronic device (101) may comprise a communication circuit (190, 490), a display (160, 260, 460), at least one processor (120, 420), and a memory (130, 430) storing instructions. According to an embodiment, the instructions may be configured such that, when executed by the at least one processor, the electronic device connects to a wearable electronic device through the communication circuit. According to an embodiment, the instructions may be configured such that the electronic device receives a request for setting a cover face to be displayed on the display. According to an embodiment, the instructions may be configured such that the electronic device obtains, from the wearable electronic device, information about at least one component constituting a watch face of the wearable electronic device, in response to the request. According to an embodiment, the instructions may be configured such that the electronic device sets the cover face to include at least one component corresponding to the at least one component of the watch face, on the basis of the obtained information on the at least one component. According to an embodiment, the instructions may be configured such that the electronic device displays the set cover face.

## Description

### [Technical Field]

An embodiment disclosed in this document relates to an electronic device for providing a cover face associated with a watch face, an operating method therefor, and a storage medium.

### [Background Art]

As communication technology advances, wearable electronic devices are becoming smaller and lighter, making it possible to wear them on the body without significant discomfort. For example, wearable electronic devices such as head-mounted display devices (HMDs), smartwatches (or bands), contact lens-type devices, ring-type devices, glove-type devices, shoe-type devices, or garment-type devices are becoming commercially available. Since wearable electronic devices are worn directly on the body, they may enhance portability and user accessibility.

Meanwhile, wearable electronic devices may be used in conjunction with electronic devices such as smartphones. In this case, users may access content more easily by utilizing both electronic devices and wearable electronic devices.

In line with the recent consumer trend of prioritizing design, the development of wearable electronic devices and electronic devices has increasingly placed emphasis on both the external design of the wearable electronic device and the user convenience achieved through interoperation between the wearable electronic device and the electronic device.

### [Detailed Description of the Invention]

### [Technical Solution]

According to an embodiment, an electronic device 101 may include a communication circuit 190 or 490, a display 160, 260, or 460, at least one processor 120 or 420, and memory 130 or 430 storing instructions. According to an embodiment, the instructions may be configured to cause, when executed by the at least one processor, the electronic device to connect to a wearable electronic device via the communication circuit. According to an embodiment, the instructions may be configured to cause the electronic device to receive a request for configuring a cover face to be displayed on the display. According to an embodiment, the instructions may be configured to cause the electronic device to obtain, in response to the request, information about at least one component constituting a watch face of the wearable electronic device from the wearable electronic device. According to an embodiment, the instructions may be configured to cause the electronic device to configure, based on the obtained information about at least one component, the cover face to include at least one component corresponding to at least one component of the watch face. According to an embodiment, the instructions may be configured to cause the electronic device to display the configured cover face.

According to an embodiment, a method for providing a cover face associated with a watch face in an electronic device may include receiving a request for configuring a cover face to be displayed on a display of the electronic device. According to an embodiment, the method may include obtaining, in response to the request, information about at least one component constituting a watch face of a wearable electronic device connected to the electronic device from the wearable electronic device. According to an embodiment, the method may include configuring, based on the obtained information about at least one component, the cover face to include at least one component corresponding to at least one component of the watch face. According to an embodiment, the method may include displaying the configured cover face.

According to an embodiment, a non-transitory storage medium may store instructions, wherein the instructions may be configured to cause, when executed by at least one processor 120 or 520 of an electronic device 101, the electronic device to perform at least one operation, and the at least one operation may include receiving a request for configuring a cover face to be displayed on a display of the electronic device. According to an embodiment, the at least one operation may include obtaining, in response to the request, information about at least one component constituting a watch face of a wearable electronic device connected to the electronic device from the wearable electronic device. According to an embodiment, the at least one operation may include configuring, based on the obtained information about at least one component, the cover face to include at least one component corresponding to at least one component of the watch face. According to an embodiment, the at least one operation may include displaying the configured cover face.

### [Brief Description of Drawings]

FIG. 1 is a block diagram of an electronic device within a network environment according to an embodiment.
FIG. 2A is an exemplary diagram illustrating the front and back faces of an electronic device in an unfolded state according to an embodiment.
FIG. 2B is an exemplary diagram illustrating the electronic device of FIG. 2A in a folded state.
FIG. 3 is a diagram illustrating a method for configuring a cover face of an electronic device based on a watch face of an external electronic device according to an embodiment.
FIG. 4 is an internal block diagram of an external electronic device and an electronic device, respectively, according to an embodiment.
FIG. 5 is an operational flowchart of an electronic device for providing a cover face associated with a watch face according to an embodiment.
FIG. 6 is a diagram illustrating the configuration of a watch face displayed on an external electronic device and the configuration of a cover face displayed on an electronic device according to an embodiment.
FIG. 7 is a diagram illustrating the layout of a cover face corresponding to the layout of a watch face according to an embodiment.
FIG. 8 is a diagram illustrating components arranged in a cover face layout corresponding to components arranged in a watch face layout according to an embodiment.
FIG. 9 is a diagram illustrating a first arrangement configuration that varies based on information about components of a cover face according to an embodiment.
FIG. 10 is a diagram illustrating a second arrangement configuration that varies based on information about components of a cover face according to an embodiment.
FIG. 11 is a signal flowchart between an electronic device and an external electronic device for obtaining information about components of a watch face according to an embodiment.
FIG. 12 is a diagram illustrating the arrangement of components of a cover face of an electronic device according to an embodiment.
FIG. 13 is a diagram illustrating an example of the arrangement of components of a cover face according to the addition of components of a watch face according to an embodiment.
FIG. 14 is a diagram illustrating an example of the arrangement of components in a separate area of a cover face according to an embodiment.

In connection with the description of the drawings, the same or similar reference numerals may be used for identical or similar components.

### [Mode for Carrying out the Invention]

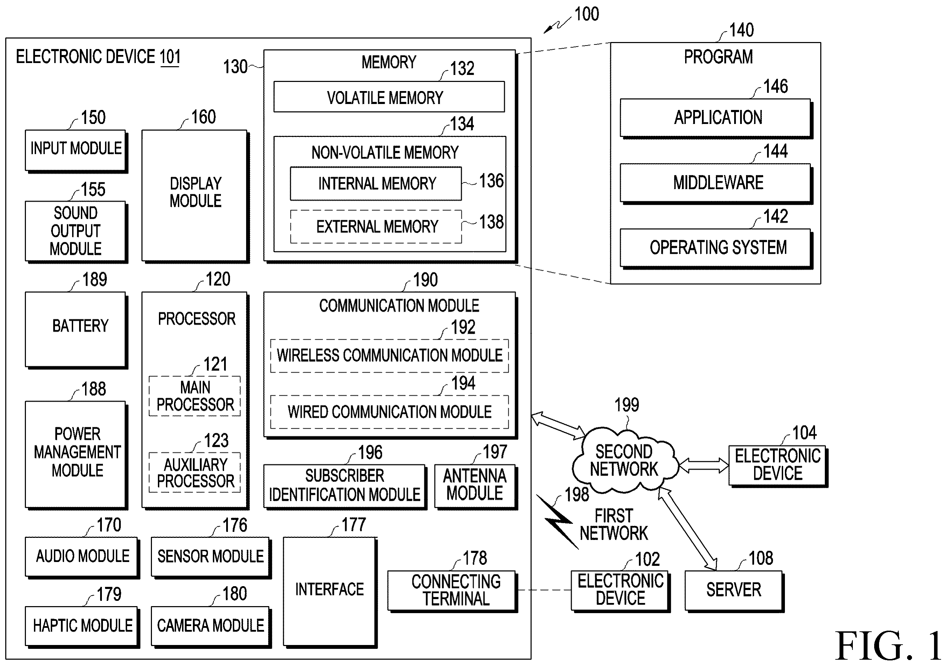

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

In the following detailed description, components that may be easily understood through the previous embodiments may be assigned the same reference numerals in the drawings or may have reference numerals omitted, and detailed descriptions thereof may also be omitted. An electronic device 101 according to an embodiment disclosed in this document may be implemented by selectively combining configurations of different embodiments, and a configuration of an embodiment may be replaced by a configuration of another embodiment. For example, it should be noted that the disclosure is not limited to a specific drawing or embodiment.

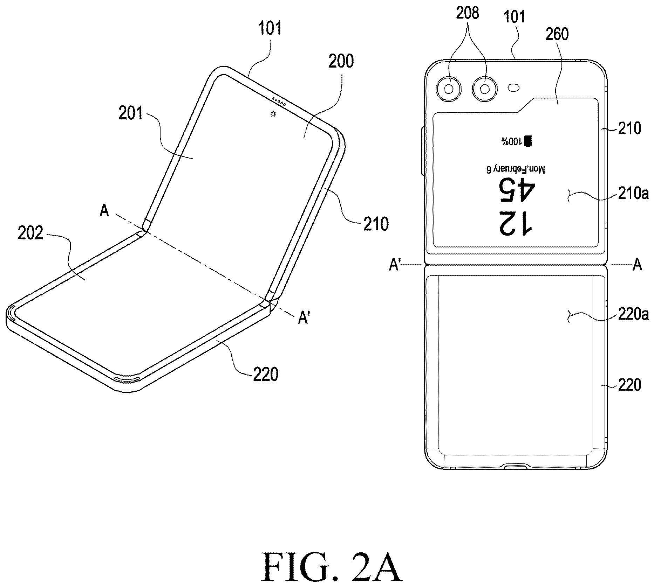

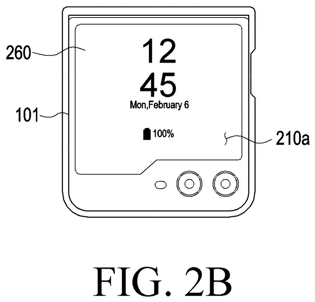

FIG. 2A is an exemplary diagram illustrating the front and rear faces of an electronic device in an unfolded state according to an embodiment, and FIG. 2B is an exemplary diagram illustrating the electronic device in FIG. 2A in a folded state.

Referring to FIGS. 2A and 2B, in an embodiment, an electronic device 101 may include a flexible or foldable display 200 (hereinafter, abbreviated as "display" 200). In this specification, the surface on which the display 200 is disposed is defined as a front face of the electronic device 101. In addition, the surface opposite the front face is defined as a rear face of the electronic device 101.

As illustrated in FIGS. 2A and 2B, a foldable housing may include a first housing structure (or structure) 210 and a second housing structure 220. The foldable housing of the electronic device 101 is not limited to the shape and mounting illustrated in FIGS. 2A and 2B, and may be implemented by combining and/or mounting other shapes or components. According to an embodiment, the first housing structure 210 and the second housing structure 220 may be disposed on both sides of a folding axis A-A', and may have an overall symmetrical shape with respect to the folding axis A-A'. The angle or distance between the first housing structure 210 and the second housing structure 220 may vary depending on whether the electronic device 101 is in an unfolded state, a folded state, or a partially unfolded (or partially folded) intermediate state.

According to an embodiment, when the electronic device 101 is in an unfolded state, the first housing structure 210 and the second housing structure 220 may be arranged to form an angle of 180 degrees and face the same direction. In the unfolded state, the surface of a first display area 201 and the surface of a second display area 202 of the display 200 may form an angle of 180 degrees between them and may face the same direction (e.g., the frontward direction of the electronic device 101). According to an embodiment, the display 200 may refer to a display in which at least a portion thereof may be deformed into a flat or curved surface. The division of areas of the display 200 illustrated in FIG. 2A is exemplary, and the display 200 may be divided into a plurality of areas (e.g., four or more areas or two areas) depending on its structure or function.

According to an embodiment, one or more components may be disposed or visually exposed on the rear face of the electronic device 101. For example, a sub-display 260 may be disposed on the rear face of the electronic device 101. Furthermore, a camera 208 may be disposed on the rear face of the electronic device 101. Based on the unfolded state, the display 200 disposed on the front face of the electronic device 101 may be referred to as a front display (or main display), and the sub-display 260 disposed on the rear face may be referred to as a rear display (or sub-display).

According to an embodiment, when the electronic device 101 is in a folded state (e.g., FIG. 2B), the first housing structure 210 and the second housing structure 220 may be disposed to face each other. The surface of the first housing structure 210 and the surface of the second housing structure 220 of the display 200 may form a narrow angle (e.g., between 0 and 10 degrees) and may face each other.

The electronic device 101 may transition to a folded state, an unfolded state, or a partially unfolded state (or partially folded state). Referring to FIG. 2B, the electronic device 101 may transition from an unfolded state, as illustrated in FIG. 2A, to a folded state. When the electronic device 101 is folded in an "in-folding" manner, the surfaces of the first display area 201 and the second display area 202 may be folded to face each other and substantially concealed.

In this way, the electronic device including a flexible display may be folded or bent around an axis. Here, the axis may be preconfigured or arbitrary. A preconfigured axis may mean that only a specific area (e.g., a portion including the axis) of the flexible display of the electronic device is bendable. On the other hand, an arbitrary axis may mean that the entire display area of the electronic device is bendable. Although FIGS. 2A and 2B illustrate the electronic device being folded in half around the axis passing through the center, those skilled in the art will readily understand that there are no limitations to the location of the axis.

According to an embodiment, the sub-display 260 disposed on the rear face of the electronic device 101 may be formed to occupy at least a portion of the first surface 210a or most of the area excluding a rear camera 208. According to an embodiment, in the folded state, the electronic device may provide content through the sub-display 260. For example, the content may include a standby screen or an application execution screen. For example, the standby screen may include date information, time information, battery charge information, and/or notification information such as event occurrence. According to an embodiment, the shape and/or size of the sub-display 439 is not limited to those illustrated in FIGS. 2A and 2B. For example, although the sub-display 260 has a rectangular shape, excluding the area where the rear camera 208 is disposed, in FIGS. 2A and 2B, it may also be configured in a circular or square shape.

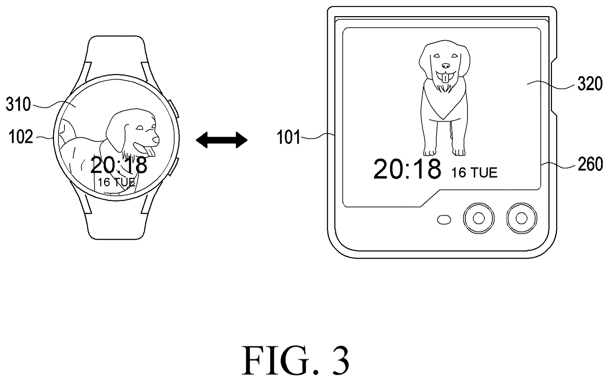

FIG. 3 is a diagram illustrating a method for configuring a cover face of an electronic device based on a watch face of an external electronic device according to an embodiment.

Referring to FIG. 3, a wearable electronic device 102 may be a smartwatch that may be worn on (or detached from) at least a portion of a user's body, and an electronic device 101 may be a device that communicates with the external electronic device 102 based on the same user account. Alternatively, the electronic device 101 may communicate with the external electronic device 102, based on a user's selection.

A graphical user interface, including an area where time information and/or content may be displayed and/or components, may be displayed on a display of the wearable electronic device 102. The user interface of the wearable electronic device 102 may be referred to as a watch face 310. Here, the watch face 310 may include functions and/or information that may be provided through the wearable electronic device 102, excluding unique functions of the watch (e.g., providing the current time). For example, the watch face 310 may include a representative image, and in addition to the representative image, may include components corresponding to functions (e.g., applications) capable of being executed by the wearable electronic device 102.

Meanwhile, a graphical user interface, including an area where time information and/or content may be displayed and/or components, may also be displayed on the sub-display 260 that is visually exposed when the electronic device 101 is in the folded state. In the electronic device 101, the user interface displayed on the sub-display 260 may be referred to as a cover face 320. Here, the cover face 320 may also be referred to as a clock face.

Setting and changing of the configuration of the watch face 310 may be performed through an editing screen of the electronic device 101 or through an editing screen provided by the wearable electronic device 102. In addition, setting and changing of the configuration of the cover face 320 may be performed through the editing screen of the electronic device 101. In this way, although the configurations of the watch face 310 and cover face 320 are set and changed independently of each other, it is also necessary to consider, along with the external design of the wearable electronic device 102, user convenience achieved through interoperation between the wearable electronic device 102 and the electronic device 101. In response to editing of at least one of the watch face 310 and cover face 320, the edited content may be shared through interoperation between them to recommend and provide a user interface reflecting the editing, thereby increasing user preference.

In an embodiment, there are provided an electronic device 101 for providing a cover face associated with a watch face displayed on the wearable electronic device 102, thereby significantly enhancing the convenience and experience of a user using the electronic device 101, an operating method thereof, and a storage medium.

According to an embodiment, as illustrated in FIG. 3, in the case where the display of the wearable electronic device 102 has a limited size and the sub-display 260 of the electronic device 101 is formed to occupy most of the area excluding the rear camera (e.g., the rear camera 208 in FIG. 2B), graphical elements similar to the screen (e.g., watch face 310) being displayed through the wearable electronic device 102 may be displayed, thereby providing a user interface optimized for the sub-display 260. For example, a cover face 320 may be configured and recommended to dynamically change the images and components of the cover face 320 so as to correspond to the images and components constituting the watch face 310. Accordingly, even if the size and/or shape of the sub-display 260 of the electronic device 101 is different from those of the display of the wearable electronic device 102, the cover face 320 may be configured based on the images and components constituting the watch face 310, thereby providing a cover face optimized for the sub-display 260 of the electronic device 101.

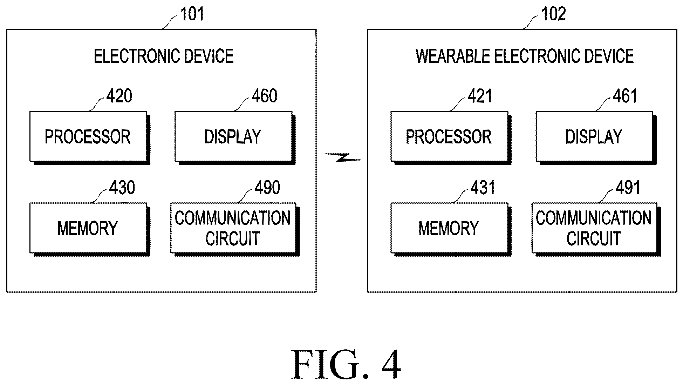

FIG. 4 is an internal block diagram of an external electronic device and an electronic device, respectively, according to an embodiment.

Referring to FIG. 4, an electronic device 101 (e.g., the electronic device 101 in FIG. 1 or the electronic device 101 in FIGS. 2A to 3) according to an embodiment may include a processor 420 (e.g., the processor 120 in FIG. 1), a display 460 (e.g., the display module 160 in FIG. 1 or the sub-display 260 in FIGS. 2A to 3), and/or a communication circuit 490 (e.g., the communication module 190 in FIG. 1). The electronic device 101 according to an embodiment may further include memory 430 (e.g., the memory 130 in FIG. 1). Here, not all components illustrated in FIG. 4 are essential components of the electronic device 101, and the electronic device 101 may be implemented with more or fewer components than those illustrated in FIG. 4.

According to an embodiment, the electronic device 101 may be connected to a wearable electronic device 102 via a communication circuit 490. Here, the electronic device 101 and the wearable electronic device 102 may be connected to each other, based on the same user account, through their respective communication circuits 490 and 491. Alternatively, the electronic device 101 and the wearable electronic device 102 may be connected to each other, based on user selection, through their respective communication circuits 490 and 491.

According to an embodiment, the memory 430 may store an operating system related to the operation of the electronic device 101, and/or a program or at least one application supporting at least one user function executed by the electronic device 101. According to an embodiment, the memory 230 may store a control program for controlling the electronic device 101, a UI related to an application provided by the manufacturer or downloaded from an external source, images for providing the UI, user information, documents, databases, or related data. For example, the memory 430 may store user configurations related to an operation for configuring a watch face of the wearable electronic device 102.

According to an embodiment, the memory 430 may store instructions that, when executed, cause the electronic device 101 to connect to the wearable electronic device 102 via the communication circuit 490, receive a request to configure a cover face to be displayed on the display 460, obtain information about at least one component constituting a watch face of the wearable electronic device 102 from the wearable electronic device 102 in response to the request, configure the cover face to include at least one component corresponding to at least one component of the watch face, based on the obtained information about the at least one component, and display the configured cover face.

According to an embodiment, the processor 420 may output (or display) the cover face on the display 460. The cover face may be a graphical user interface displayed on the display 460 (e.g., the sub-display 260 in FIGS. 2A to 3) that is visually exposed to the outside when the electronic device 101 is in a folded state. The cover face may include a background screen, such as a representative image, to be displayed through the display 460.

The cover face may include areas where time information and/or content may be displayed and/or components, depending on the layout. Here, at least one component of the cover face may be displayed in a designated area according to the layout of the cover face. Here, the combination of layouts may vary. Therefore, a combination of layouts constituting the cover face may be recommended to the user. Alternatively, recommendations may be made based on components, or a cover face may be configured and recommended based on a combination of layouts and components.

At least one component constituting the cover face may be displayed using an object representing a function corresponding to an executable application. For example, the number, size, and/or color of components available may vary depending on the layout of the cover face. In an embodiment, the processor 520 may determine this, based on at least one component constituting the watch face. Here, components constituting the watch face and cover face represent executable functions and may be referred to as various terms, such as complications, items, or widgets.

According to an embodiment, the processor 420 may receive a request to configure the cover face from a user while entering a screen (e.g., an editing screen) for configuring the cover face. For example, the processor 420 may edit the cover face or change configurations thereof through an application for changing the configurations of the cover face. In response to the request to configure the cover face, the processor 420 may obtain information necessary for configuring and changing the cover face from an application for changing the configurations of the watch face installed on the wearable electronic device 102.

The information necessary for configuring and changing the cover face may include, for example, at least one of a representative image of the watch face, a list of components constituting the watch face, and the frequency or purpose of use of the components constituting the watch face. In addition, the processor 420 may obtain location information indicating which components are arranged in which designated areas of the watch face layout. Based on the obtained location information, the processor 420 may perform configuration such that at least one component of the cover face is arranged in the layout of the cover face. For example, components performing the same function may be arranged in each layout.

According to an embodiment, since the area for displaying the components of the cover face displayed on the display 460 is relatively larger than that of the watch face, the processor 420 may adjust the shape and/or size of the designated area according to the layout of the cover face.

According to an embodiment, the processor 420 may configure the shape and/or size of a designated area according to the layout of the cover face to be larger as the usage frequency of at least one component constituting the watch face increases. In this way, the positions where respective components of the watch face and the cover face are arranged may be the same or similar within the respective layouts, but the shapes and/or sizes may be different.

For example, if the user frequently selects a component (e.g., a weather function) of the watch face, the processor 420 may also configure the shape and/or size of the area where a component (e.g., a weather function) of the cover face corresponding to the component (e.g., a weather function) of the watch face is arranged to be relatively larger than other components.

According to an embodiment, the processor 420 may reduce the shape and/or size of a designated area according to the layout of the cover face, based on the purpose of at least one component constituting the watch face. For example, when at least one component constituting the watch face has a purpose such as an execution button, the processor 420 may display an executable object (e.g., a button) in an area obtained by reducing the shape and/or size of a designated area according to the layout of the cover face. As described above, the processor 420 may provide components corresponding to the components of the watch face in various shapes and/or sizes on the cover face, depending on the purpose of the components of the watch face.

According to an embodiment, when there is no component constituting the watch face, the processor 420 may obtain an image of the watch face from the wearable electronic device 102 through the communication circuit 590. The processor 420, based on the obtained image of the watch face, may configure the cover face to include the image of the watch face, and then display the configured cover face.

Although the processor 420 has been described by way of example as performing operations related to the configuration of a cover face in response to receiving a request to configure the cover face to be displayed on the display 460, the disclosure is not limited thereto. For example, operations of changing the configuration of the watch face in the wearable electronic device 102, then providing a notification regarding the change of the watch face to the electronic device 101, and configuring the cover face in the electronic device 101 in response to a selection of the notification may be performed. Furthermore, a function for configuring the cover face may be activated simply by placing the wearable electronic device 102 within a certain range of the electronic device 101, without using a menu for configuring the cover face in the electronic device 101. In this case, user convenience may be improved due to the intuitive cover face configuration method.

Meanwhile, the wearable electronic device 102 in FIG. 4 may be the electronic device 102 in FIG. 1. According to an embodiment, the wearable electronic device 102 may be a watch-type wearable electronic device. The wearable electronic device 102 (e.g., the wearable electronic device 102 in FIG. 3) according to an embodiment may include a processor 421, memory 431, a display 461, and/or a communication circuit 491. When describing the wearable electronic device 102, detailed descriptions of components similar to the embodiment in FIG. 1 or easily understood through the embodiment in FIG. 1 may be omitted.

According to an embodiment, the electronic device 101 may include a communication circuit 190 or 490, a display 160, 260, or 460, at least one processor 120 or 420, and memory 130 or 430 storing instructions. According to an embodiment, the instructions may be configured to cause, when executed by the at least one processor, the electronic device to connect to a wearable electronic device via the communication circuit. According to an embodiment, the instructions may be configured to cause the electronic device to receive a request for configuring a cover face to be displayed on the display. According to an embodiment, the instructions may be configured to cause the electronic device, in response to the request, to obtain information about at least one component constituting a watch face of the wearable electronic device from the wearable electronic device. According to an embodiment, the instructions may be configured to cause the electronic device to configure the cover face to include at least one component corresponding to at least one component of the watch face, based on the obtained information about the at least one component. According to an embodiment, the instructions may be configured to cause the electronic device to display the configured cover face.

According to an embodiment, the instructions may be configured to cause the electronic device to obtain location information of at least one component of the watch face arranged in a layout of the watch face and, based on the obtained location information, arrange at least one component of the cover face in a layout of the cover face.

According to an embodiment, at least one component arranged in the layout of the watch face and at least one component arranged in the layout of the cover face may be configured to perform the same function.

According to an embodiment, the information about at least one component constituting the watch face may include at least one of a list of at least one component constituting the watch face, a usage frequency of the at least one component, or a purpose of the component.

According to an embodiment, at least one component of the watch face may be displayed in a designated area according to the layout of the watch face, and the instructions may be configured to cause the electronic device to adjust a shape and/or size of a designated area according to the layout of the cover face, based on the usage frequency of at least one component constituting the watch face, and configure the cover face so that at least one component of the cover face is arranged in an area having the adjusted shape and/or size.

According to an embodiment, the instructions may be configured to cause the electronic device to reduce a shape and/or size of the designated area according to the layout of the cover face, based on the purpose of at least one component constituting the watch face, and configure the cover face so that at least one component of the cover face is arranged in an area having the reduced shape and/or size.

According to an embodiment, when there is no component constituting the watch face, the instructions may be configured to cause the electronic device to obtain an image of the watch face, configure the cover face to include the image of the watch face, based on the obtained image of the watch face, and display the configured cover face.

According to an embodiment, at least one component of the cover face corresponding to at least one component of the watch face may be displayed using an object representing a function corresponding to an executable application.

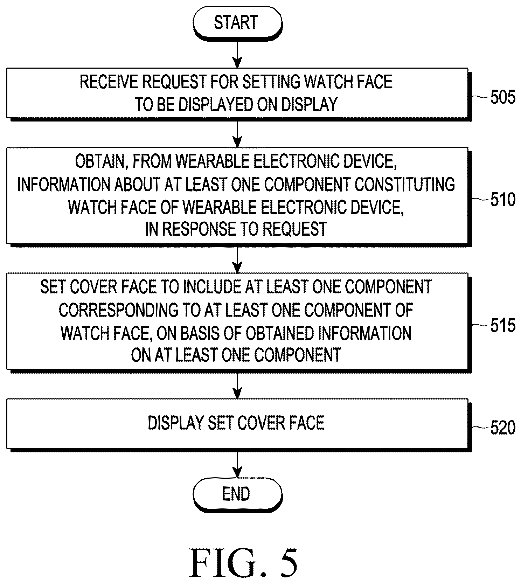

FIG. 5 is an operational flowchart of an electronic device for providing a cover face associated with a watch face according to an embodiment.

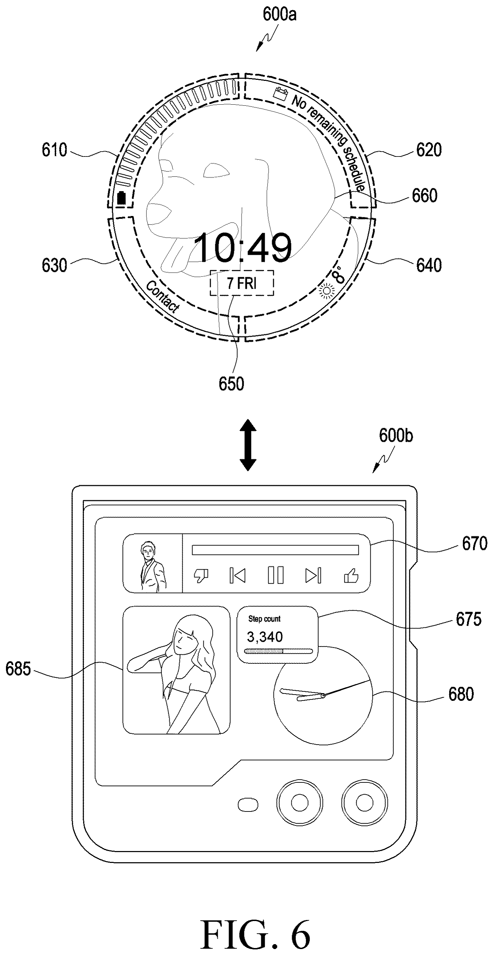

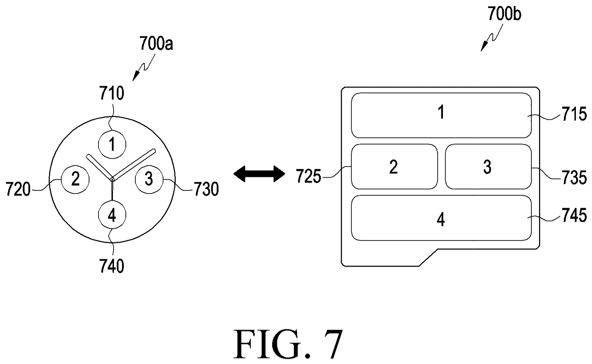

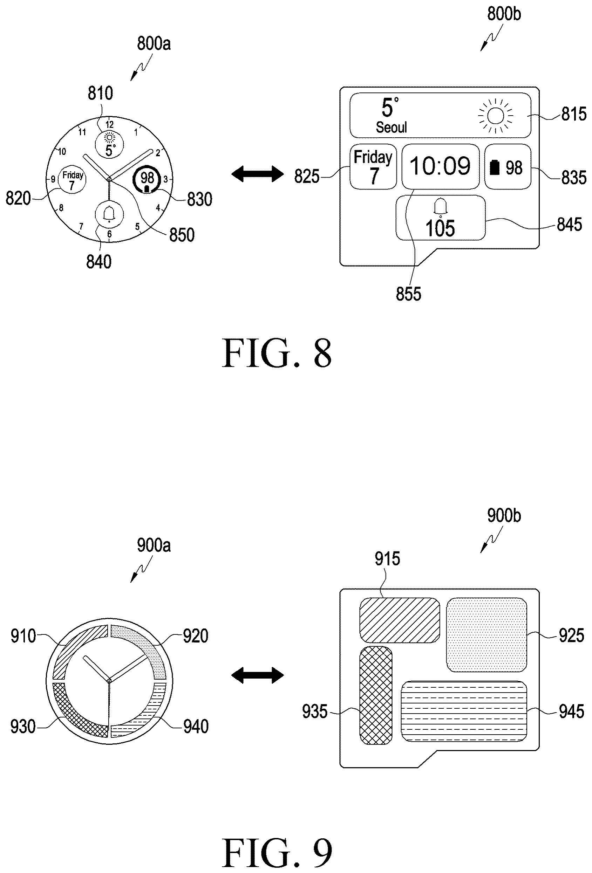

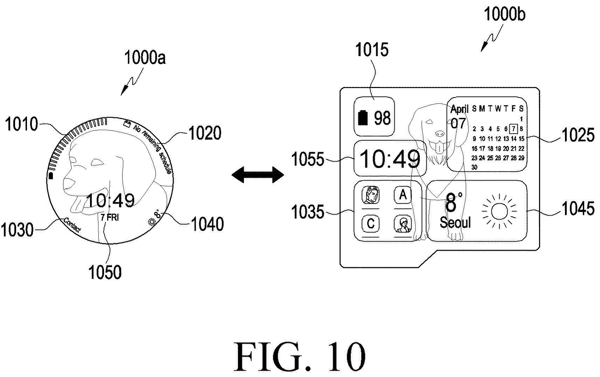

Referring to FIG. 5, the operating method may include operations 505 to 520. Each operation of the operating method in FIG. 5 may be performed by an electronic device (e.g., at least one of the electronic device 101 in FIGS. 1 to 4 and at least one processor (e.g., the processor 120 in FIG. 1 or the processor 420 in FIG. 4) of the electronic device). In an embodiment, at least one of operations 505 to 520 may be omitted, the sequence of some operations may be changed, or other operations may be added. In order to help understand the description of FIG. 5, the description will be made with reference to FIGS. 6 to 10. FIG. 6 is a diagram illustrating the configuration of a watch face displayed on an external electronic device and the configuration of a cover face displayed on an electronic device according to an embodiment, FIG. 7 is a diagram illustrating the layout of a cover face corresponding to the layout of a watch face according to an embodiment, FIG. 8 is a diagram illustrating components arranged in a cover face layout corresponding to components arranged in a watch face layout according to an embodiment, FIG. 9 is a diagram illustrating a first arrangement configuration that varies based on information about components of a cover face according to an embodiment, and FIG. 10 is a diagram illustrating a second arrangement configuration that varies based on information about components of a cover face according to an embodiment.

According to an embodiment, in operation 505, the electronic device 101 may receive a request for configuring a cover face (e.g., 320 in FIG. 3) to be displayed on a display (e.g., the sub-display 260 in FIGS. 2A and 2B).

In operation 510, the electronic device 101 may obtain, from a wearable electronic device 102 connected to the electronic device 101, information about at least one component constituting a watch face (e.g., 310 in FIG. 3) of the wearable electronic device 102.

For example, referring to FIG. 6, the watch face 600a displayed on the wearable electronic device 102 may include at least one component 610, 620, 630, 640, or 650 representing an executable application and a background image (or representative image) 660. As illustrated in FIG. 6, components constituting the watch face 600a may be displayed using objects such as icons or information. In addition, components constituting the watch face 600a may be arranged in a designated area of the layout of the watch face 600a. Furthermore, the cover face 600b displayed on the electronic device 101 may also include at least one component 670, 675, 680, or 685.

In an embodiment, the electronic device 101 may use information about the components constituting the watch face 600a to determine which components to use to configure the cover face 600b. Since the electronic device 101 provides a menu for changing the configurations of the watch face 600a, it may have information about the components of the watch face 600a stored in memory 530. However, since the configurations of the watch face 600a may be changed through the menu provided by the wearable electronic device 102, the electronic device 101 may request and receive information about the components of the watch face 600a from the wearable electronic device 102. In an embodiment, when the configurations of the watch face 600a are changed on the wearable electronic device 102 and information about that is synchronized with the electronic device 101, the operation of requesting information about the components of the watch face 600a from the wearable electronic device 102 may be omitted. For example, the electronic device 101 may also use the synchronized information in order to configure the cover face 600b.

Meanwhile, although the above description exemplifies a case where the electronic device 101 configures the cover face 600b using the watch face 600a, the reverse case, where the electronic device 101 configures the watch face 600a using the cover face 600b, may also be possible. For example, the electronic device 101 may generate a watch face 600a similar to the cover face 600b, based on information about the components of the cover face 600b, and provide it to the wearable electronic device 102.

In addition, at least some of the above-described operations of the electronic device 101 may be performed by the wearable electronic device 102. For example, the reverse case, where the wearable electronic device 102 configures the watch face 600a using the cover face 600b, may also be possible. To this end, the wearable electronic device 102 may obtain information about the components of the cover face 600b and configure the watch face 600a, based on the obtained information.

In operation 515, the electronic device 101, based on the obtained information about at least one component, may configure the cover face to include at least one component corresponding to at least one component of the watch face.

In operation 520, the electronic device 101 may display the configured cover face. For example, the electronic device 101 may display a preview of the configured cover face. Here, the preview of the cover face may refer to a candidate cover face recommended for use as the cover face.

By displaying the preview of the configured cover face, the electronic device 101 may recommend a cover face having graphical elements similar to the watch face being displayed through the wearable electronic device 102. The electronic device 101, in response to selection of a preview of the configured cover face, may configure and store the selected cover face as a representative cover face of the electronic device 101. Accordingly, a user interface associated with the watch face and optimized for the display (e.g., the sub-display 260 in FIGS. 2A and 2B) of the electronic device 101 may be provided.

According to an embodiment, the electronic device 101 may obtain information about a location where at least one component of the watch face is arranged in the layout of the watch face.

According to an embodiment, the electronic device 101 may place at least one component of the cover face in the layout of the cover face, based on the obtained location information.

According to an embodiment, at least one component arranged in the layout of the watch face and at least one component arranged in the layout of the cover face may be configured to perform the same function.

For example, referring to FIG. 7, a case is illustrated where components 710, 720, 730, and 740 of a watch face 700a of a wearable electronic device 102 are arranged in designated areas of the layout of the watch face 700a. The electronic device 101 may arrange relevant components 715, 725, 735, and 745 in the layout of the cover face 700b so as to correspond to the components 710, 720, 730, and 740 arranged in the layout of the watch face 700a. As illustrated in FIG. 7, the positions of the components 715, 725, 735, and 745 arranged in the layout of the cover face 700b may be determined based on the relative positions of the components 710, 720, 730, and 740 arranged in the layout of the watch face 700a. In addition, as illustrated in FIG. 7, the shapes and/or sizes of the areas where the components 715, 725, 735, and 745 of the cover face 700b are arranged may be determined differently depending on the layout of the cover face 700b.

According to an embodiment, in the opposite case, the electronic device 101 may also arrange the components 710, 720, 730, and 740 in the layout of the watch face 700a so as to correspond to the components 715, 725, 735, and 745 arranged in the layout of the cover face 700b.

For example, FIG. 8 shows an exemplary case where components 810, 820, 830, 840, and 850 of a watch face 800a of the wearable electronic device 102 are arranged in designated areas of the layout of the watch face 800a. While the positions and sizes of components capable of being arranged in the watch face 800a may be fixed, the positions and sizes of components capable of being arranged in a cover face 800b are relatively less restricted, so the components may be varied within the layout of the cover face 800b. Accordingly, the positions of components 815, 825, 835, 845, and 855 of the cover face 800b correspond to the positions of the components 810, 820, 830, 840, and 850 of the watch face 800a, but the shapes and/or sizes of the areas where the components 815, 825, 835, 845, and 855 are arranged may be relatively diverse.

According to an embodiment, information about at least one component constituting the watch face may include at least one of a list of at least one component constituting the watch face, a usage frequency of the at least one component, or a purpose of the component.

According to an embodiment, at least one component of the watch face may be displayed in a designated area according to the layout of the watch face.

According to an embodiment, the electronic device 101 may adjust the shape and/or size of a designated area according to the layout of the cover face, based on the usage frequency of at least one component constituting the watch face.

For example, FIG. 9 show an exemplary case where components 910, 920, 930, and 940 of a watch face 900a of a wearable electronic device 102 are arranged in designated areas of the layout of a watch face 900a. The sizes of components 915, 925, 935, and 945 of a cover face 900b or the areas where the components 915, 925, 935, and 945 are arranged within the layout may be determined based on the usage frequency of the components 910, 920, 930, and 940 of the watch face 900a. The wearable electronic device 102 or the electronic device 101 may identify the usage frequency for each of the components 910, 920, 930, and 940 of the watch face 900a. The electronic device 101 may determine the size of each of the components 915, 925, 935, and 945, based on the identified information or information provided from the wearable electronic device 102. Here, the usage frequency may be determined based on the number of user selections or the amount of information displayed for each of the components 910, 920, 930, and 940.

According to an embodiment, the electronic device 101 may configure the cover face such that at least one component of the cover face is arranged in an area having the adjusted shape and/or size.

According to an embodiment, the electronic device 101 may reduce the shape and/or size of a designated area according to the layout of the cover face, based on the purpose of at least one component constituting the watch face. According to an embodiment, the electronic device 101 may configure the cover face such that at least one component of the cover face is arranged in an area having the reduced shape and/or size.

For example, FIG. 10 shows an exemplary case where components 1010, 1020, 1030, 1040, and 1050 of a watch face 1000a of the wearable electronic device 102 are arranged in designated areas of the layout of the watch face 1000a. The sizes of components 1015, 1025, 1035, 1045, and 1055 of a cover face 1000b or the areas where the components 1015, 1025, 1035, 1045, and 1055 are arranged within the layout may be determined according to the purpose of the components 1010, 1020, 1030, 1040, and 1050 of the watch face 1000a. For example, when at least one component constituting the watch face 1000a has a purpose such as an execution button, the electronic device 101 may display an executable object (e.g., a start button) in an area obtained by reducing the shape and/or size of a designated area according to the layout of the cover face 1000b. As described above, the electronic device 101 may provide components, corresponding to the components of the watch face, in various shapes and/or sizes on the cover face, depending on the purpose of the components of the watch face.

According to an embodiment, when there is no component constituting the watch face, the electronic device 101 may obtain an image of the watch face. For example, the absence of at least one component constituting the watch face may mean that only a representative image is displayed on the watch face. Therefore, in response to a request for configuring a cover face, the electronic device 101 may obtain an image of the watch face, instead of information about at least one component constituting the watch face, from the wearable electronic device 102.

According to an embodiment, the electronic device 101, based on the obtained image of the watch face, may configure the cover face to include the image of the watch face. According to an embodiment, the electronic device 101 may display the cover face configure to include the image of the watch face.

According to an embodiment, at least one component of the cover face corresponding to at least one component of the watch face may be displayed using an object representing a function corresponding to an executable application.

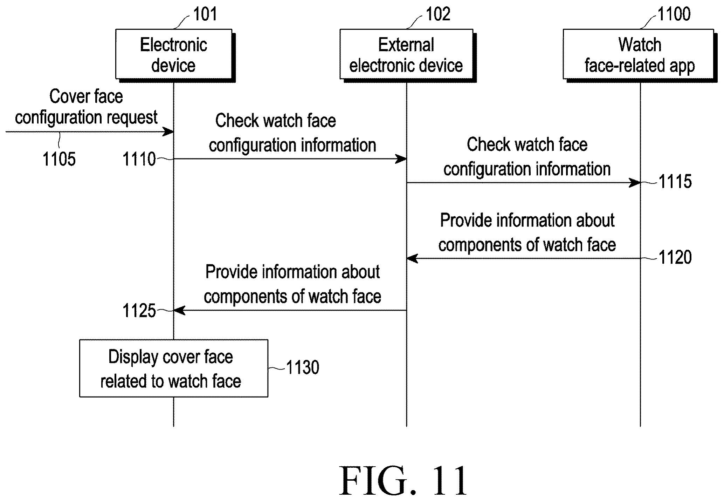

FIG. 11 is a signal flowchart between an electronic device and an external electronic device for obtaining information about components of a watch face according to an embodiment.

Referring to FIG. 11, the electronic device 101, in response to a cover face configuration request in operation 1105, may check watch face configuration information from an external electronic device (e.g., a wearable electronic device) 102 in operation 1110. In operation 1115, the wearable electronic device 102 may check watch face configuration information through a watch face-related app 1100 installed in the wearable electronic device 102, receive information about components constituting the watch face in operation 1120, and provide the information to the electronic device 101 in operation 1125. For example, the wearable electronic device 102 may provide components (e.g., a list of complications) that constitute the watch face and location information between the components.

Upon receiving information about the components constituting the watch face, the electronic device 101 may display a cover face related to the watch face in operation 1130. For example, the electronic device 101 may recommend a cover face having graphical elements similar to the watch face currently being displayed through the wearable electronic device 102. In response to selection of a preview of the cover face, the electronic device 101 may configure and store the selected cover face as a representative cover face of the electronic device 101.

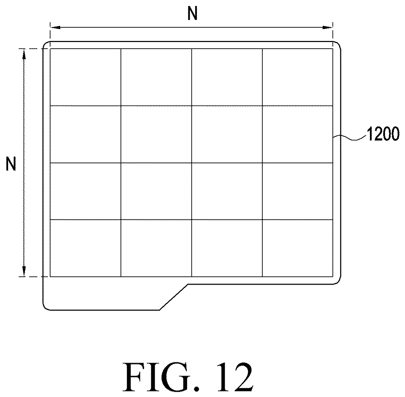

FIG. 12 is a diagram illustrating the arrangement of components of a cover face of an electronic device according to an embodiment.

Referring to FIG. 12, the cover face 1200 of the electronic device 101 may have a layout configured to include N x N components. The sizes of the components arranged in the layout or the sizes of designated areas where the components are arranged may be expressed in various values, such as 1x1, 1x2, 1x2, 2x2, ..., NxN, and the configurable layout may also be expressed differently according thereto.

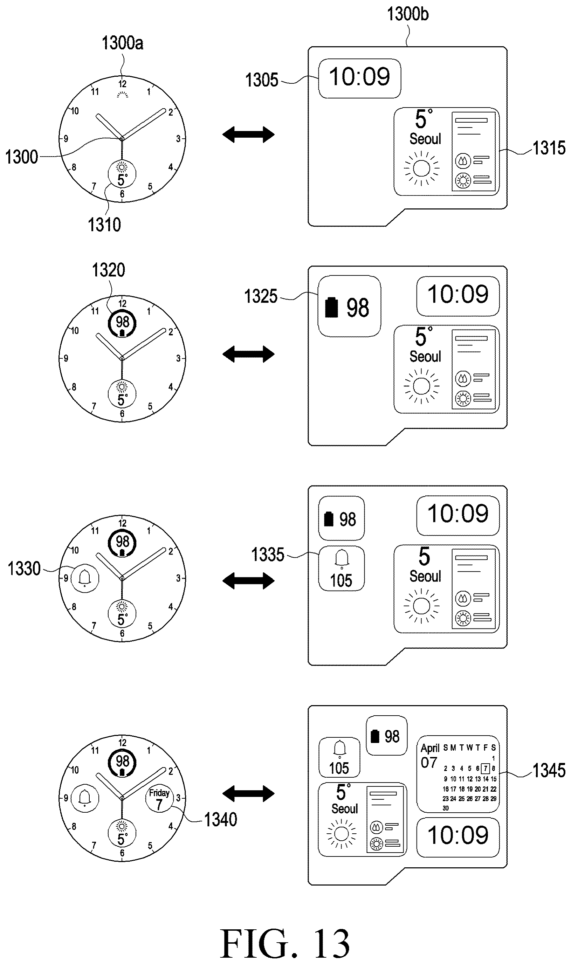

FIG. 13 is a diagram illustrating an example of the arrangement of components of a cover face according to the addition of components of a watch face according to an embodiment.

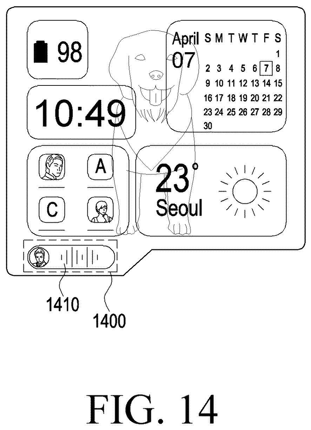

FIG. 13 shows an exemplary case where components 1305 and 1315 corresponding to components 1300 and 1310, which may be displayed on a watch face 1300a, are displayed on a cover face 1300b. When another component 1320 is added to the watch face 1300a, a component 1325 may be further arranged on the cover face 1300b so as to correspond to the added component 1320. In this way, when other components 1330 and 1340 are added to the watch face 1300a, components 1335 and 1345 may be further arranged on the cover face 1300b so as to correspond to the added components 1330 and 1340. In this way, the number of components that may be displayed on the cover face 1300b may be determined based on the number of components configured on the watch face 1300a. Since the number of components that may be displayed on the cover face 1300b is greater than the number of components configured on the watch face 1300a, when the number of components configured on the watch face 1300a corresponds to the maximum number, the electronic device 101 may place an additional component 9 in a separate area 1400, as illustrated in FIG. 14. Here, FIG. 14 is a diagram illustrating an example of arrangement of a component through a separate area of the cover face according to an embodiment. When the number of components to be displayed on the cover face 1300b exceeds a specified value, the electronic device 101 may display the components using an icon in a separate area 1400, as illustrated in FIG. 14.

According to an embodiment, although the electronic device 101 may perform an operation of changing and displaying the cover face displayed on the electronic device 101, based on the watch face of the wearable electronic device 102, the electronic device 101 may also change and display the watch face of the wearable electronic device 102, based on the cover face of the electronic device 101. At least some of the operations for this purpose may be implemented to be performed in the electronic device 101 or the wearable electronic device 102, respectively.

As described above, according to an embodiment, the electronic device 101 may perform control to change and display the cover face displayed on the electronic device 101, based on the watch face of the wearable electronic device 102, thereby enhancing user convenience.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to an embodiment, in a non-transitory storage medium storing instructions, the instructions may be configured to cause, when executed by at least one processor 120 or 520 of an electronic device 101, the electronic device to perform at least one operation, and the at least one operation may include receiving a request for configuring a cover face to be displayed on a display of the electronic device, obtaining, in response to the request, information about at least one component constituting a watch face of a wearable electronic device connected to the electronic device from the wearable electronic device, configuring, based on the obtained information about at least one component, the cover face to include at least one component corresponding to at least one component of the watch face, and displaying the configured cover face.

## Claims

1. An electronic device (101) comprising:
a communication circuit (190 or 490);
a display (160, 260, or 460);
at least one processor (120 or 420); and
memory (130 or 430) storing instructions,
wherein the instructions are configured to cause, when executed by the at least one processor, the electronic device to:
connect to a wearable electronic device via the communication circuit;
receive a request for configuring a cover face to be displayed on the display;
obtain, in response to the request, information about at least one component constituting a watch face of the wearable electronic device from the wearable electronic device;
configure, based on the obtained information about at least one component, the cover face to include at least one component corresponding to at least one component of the watch face; and
display the configured cover face on the display.

2. The electronic device of claim 1, wherein the instructions are configured to cause the electronic device to:
obtain location information of at least one component of the watch face arranged in a layout of the watch face; and
based on the obtained location information, arrange at least one component of the cover face in a layout of the cover face.

3. The electronic device of claim 1 or 2,
wherein at least one component arranged in the layout of the watch face and at least one component arranged in the layout of the cover face are configured to perform the same function.

4. The electronic device of any one of claims 1 to 3, wherein the information about at least one component constituting the watch face comprises
at least one of a list of at least one component constituting the watch face, a usage frequency of the at least one component, or a purpose of the component.

5. The electronic device of any one of claims 1 to 4, wherein at least one component of the watch face is displayed in a designated area according to the layout of the watch face, and
wherein the instructions are configured to cause the electronic device to:
adjust a shape and/or size of a designated area according to the layout of the cover face, based on a usage frequency of at least one component constituting the watch face; and
configure the cover face so that at least one component of the cover face is arranged in an area having the adjusted shape and/or size.

6. The electronic device of any one of claims 1 to 5, wherein the instructions are configured to cause the electronic device to:
reduce a shape and/or size of the designated area according to the layout of the cover face, based on the purpose of at least one component constituting the watch face; and
configure the cover face so that at least one component of the cover face is arranged in an area having the reduced shape and/or size.

7. The electronic device of any one of claims 1 to 6, wherein, in a case where there is no component constituting the watch face, the instructions are configured to cause the electronic device to:
obtain an image of the watch face;
configure the cover face to include the image of the watch face, based on the obtained image of the watch face; and
display the configured cover face.

8. The electronic device of any one of claims 1 to 7, wherein at least one component of the cover face corresponding to at least one component of the watch face is displayed using an object representing a function corresponding to an executable application.

9. A method for providing a cover face associated with a watch face in an electronic device, the method comprising:
receiving a request for configuring a cover face to be displayed on a display of the electronic device;
obtaining, in response to the request, information about at least one component constituting a watch face of a wearable electronic device connected to the electronic device from the wearable electronic device;
configuring, based on the obtained information about at least one component, the cover face to include at least one component corresponding to at least one component of the watch face; and
displaying the configured cover face.

10. The method for providing a cover face associated with a watch face of claim 9, further comprising:
obtaining location information of at least one component of the watch face arranged in a layout of the watch face; and
based on the obtained location information, arranging at least one component of the cover face in a layout of the cover face.

11. The method for providing a cover face associated with a watch face of claim 9 or 10,
wherein at least one component arranged in the layout of the watch face and at least one component arranged in the layout of the cover face are configured to perform the same function.

12. The method for providing a cover face associated with a watch face of any one of claims 9 to 11, wherein the information about at least one component constituting the watch face comprises
at least one of a list of at least one component constituting the watch face, a usage frequency of the at least one component, or a purpose of the component.

13. The method for providing a cover face associated with a watch face of any one of claims 9 to 12, wherein at least one component of the watch face is displayed in a designated area according to the layout of the watch face,
the method further comprising:
adjusting a shape and/or size of a designated area according to the layout of the cover face, based on a usage frequency of at least one component constituting the watch face; and
configuring the cover face so that at least one component of the cover face is arranged in an area having the adjusted shape and/or size.

14. The method for providing a cover face associated with a watch face of any one of claims 9 to 13, further comprising:
reducing a shape and/or size of the designated area according to the layout of the cover face, based on the purpose of at least one component constituting the watch face; and
configuring the cover face so that at least one component of the cover face is arranged in an area having the reduced shape and/or size.

15. A non-transitory storage medium storing instructions, wherein the instructions are configured to cause, when executed by at least one processor (120 or 520) of an electronic device (101), the electronic device to perform at least one operation, the at least one operation comprising:
receiving a request for configuring a cover face to be displayed on a display of the electronic device;
obtaining, in response to the request, information about at least one component constituting a watch face of a wearable electronic device connected to the electronic device from the wearable electronic device;
configuring, based on the obtained information about at least one component, the cover face to include at least one component corresponding to at least one component of the watch face; and
displaying the configured cover face.
